(19) Europäisches Patentamt
European Patent Office
Office européen des brevets

(11) **EP 0 946 007 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(51) Int Cl.:
*H04B 17/00* (2006.01)    *H04Q 7/34* (2006.01)

(21) Anmeldenummer: **99103652.6**

(22) Anmeldetag: **25.02.1999**

(54) **Verfahren und Vorrichtung zur Messung der Übertragungsqualität in Zellen von Mobilfunknetzen**

Method and apparatus for measuring the transmission quality in cells of mobile radio networks

Procédé et appareil pour mesurer la qualité de transmission des cellules d'un réseau radio mobile

(84) Benannte Vertragsstaaten:
**DE FI FR GB IT SE**

(30) Priorität: **27.03.1998 DE 19813564**

(43) Veröffentlichungstag der Anmeldung:
**29.09.1999 Patentblatt 1999/39**

(73) Patentinhaber: **Acterna Germany GmbH**
**72800 Eningen (DE)**

(72) Erfinder: **Willret, Ursel**
**70839 Eningen (DE)**

(74) Vertreter: **Klocke, Peter**
**ABACUS Patentanwälte**
**Klocke Späth Barth**
**European Patent and Trademark Attorneys**
**Kappelstrasse 8**
**72160 Horb (DE)**

(56) Entgegenhaltungen:
**DE-A- 4 428 729        DE-A- 4 442 613**
**DE-A- 19 533 472**

**Beschreibung**

Die vorliegende Erfindung betrifft ein Verfahren und einer Anordnung zur Messung der Übertragungsqualität in Zellen von Mobilfunknetzen, um dem Netzbetreiber zu ermöglichen, Stellen mit schlechter Übertragungsqualität innerhalb der Zellen des globalen Systems für Mobilkommunikation (GSM) zu finden.

Der Aufbau und die Organisation eines GSM-Netzes mit der Unterteilung in einzelne Zellen als kleinsten geographischen Funkversorgungsbereichs, der von einer Basisversorgungsstation (BTS) bedient wird, ist beispielsweise aus dem Buch "Mobilfunk und intelligente Netze" von Jatzek Biala, Vieweg Verlag 1994, ISBN 3-528-05302-X, bekannt. Innerhalb der Zellen und auch beim Überschreiten der einzelnen Zellen kann es auf Grund der Ausbildung der Landschaft und der von Menschen geschaffenen Umgebung immer wieder zu Störungen kommen, die Unzufriedenheiten bei den Nutzem des Mobilfunks auslösen und seitens von den Netzbetreibern auch unerwünscht sind.

Um diese Störzonen zu finden, werden entweder Messungen vom Fahrzeug mittels mobilen Testsystemen oder vom Netz aus gemacht. Beide Meßverfahren weisen Einschränkungen auf. So besteht der Hauptnachteil bei einer Messung von Fahrzeugen darin, daß eine qualifizierte Person mit den Fahrzeugen durch die Zellen fahren muß, die Messung nur einer Übertragungsrichtung, nämlich zum Fahrzeug hin, nur möglich ist, und die Qualifizierung der Zellen sehr zeitaufwendig ist. Der Hauptnachteil einer Messung vom Netz besteht darin, daß keine geographische Position mit der Messung erfaßt werden kann, so daß eine detaillierte Aussage über den geographischen Ort in der Störzone nicht möglich ist.

Die DE 195 33 472 A1 offenbart ein Verfahren zur Ortszuordnung von Messdaten ausgewählter Funkkenngrößen eines zellularen Funknetzes. Diese Ortszuordnung erfolgt bei einem zellularen Funknetz mit mindestens mehreren ortsfesten Sende- und Empfangseinrichtungen durch die Erfassung der Messdaten auf der netzseitigen Schnittstelle der ortsfesten Sende- und Empfangseinrichtungen. Die Ortszuordnung der Messdaten erfolgt mittels eines Ortsermittlungsverfahrens, wobei das Verfahren allein auf bestimmbaren Größen des Funknetzes beruht und ohne weitere Ortsbestimmungseinrichtungen auskommt. Hierzu wird ein mobiles Endgerät benutzt, und eine Bestimmung von Signallaufzeiten in dem zellularen Funknetz, eine Bestimmung von Sendeparametern mindestens einer ortsfesten Sende- und Empfangseinrichtung und eine Prädiktion der zu bestimmenden Sendeparameter durchgeführt.

Aus der DE 44 42 613 A1 ist ein System zum ermitteln der Netzgüte in Nachrichtennetzen, insbesondere Mobilfunknetzen bekannt, bei dem automatisch Verbindungen zwischen mobilen und stationären Messsegmenten aufgebaut werden und anhand von Sprachmustem eine normierte Sprachgütebewertung erfolgt. Die verschiedenen Messsegmente umfassen ein Messsegment-Mobil, Messsegment-Handy, Messsegment-Stationär und ein Auswertungssegment-Präsentation. Das Messsegment-Stationär ist in ähnlicherweise wie das Messsegment-Mobil aufgebaut. Das Messsegment-Mobil ist in der Regel in Fahrzeugen untergebracht, mit denen bestimmte vorgegebene Strecken abgefahren werden. In dem eingebauten PC sind verschiedene Testprogramme abgelegt und er enthält auch einen GPS-Empfänger. Das Messsegment-Mobil ist insgesamt ein umfangreiches Gerät mit einer Vielzahl von Einheiten, die aktiv mit dem Messsegment-Stationär kommunizieren und Daten austauschen, um die Netzgüte während des Bestehens der Verbindung einer normierten Netzgütebewertung anhand von vorgegebenen Sprachmustern zu unterziehen. Es wird festgestellt, ob Anrufe zustande kamen und die Sprachqualität am Handy bewertet.

Die DE 44 28 729 A1 beschreibt ein Verfahren und Anordnung zur bidirektionalen Vermessung von Funkkanälen bei dem in einer Mobilstation (beispielsweise Laptop) Signale, die in einem ersten zu vermessenden Kanal von einer Feststation ausgesendet werden, mit einem Messempfänger empfangen werden. Messwerte, welche die Empfangsqualität beschreiben werden als Funktion der Zeit und des Ortes aufgezeichnet. Gleichzeitig werden von der Mobilstation mit einem Messsender erzeugte Signale in einem zweiten zu vermessenden Kanal ausgesendet und in der Feststation mit einem zweiten Messempfänger empfangen und ebenfalls entsprechend aufgezeichnet.

Der vorliegenden Erfindung liegt daher die Aufgabe zugrunde, ein Verfahren und eine Anordnung vorzuschlagen, bei dem der Einsatz hochqualifizierter Mitarbeiter, die in der zu messenden Zelle umherfahren, nicht notwendig ist und genaue Informationen über die Übertragungsqualität innerhalb einer Zelle erhalten werden können.

Diese Aufgabe wird efindungsgemäß durch ein Verfahren mit den Merkmalen des Anspruchs 1 sowie durch eine Anordnung mit den Merkmalen des Anspruchs 6 gelöst. Weitere vorteilhafte Ausgestaltungen des Verfahrens und der Anordnung sind den jeweiligen diesbezüglich rückbezogenen Unteransprüchen zu nehmen.

Gemäß dem Verfahren werden die zu messende Zellen unter Verwendung einer mobilen Station (MS) und eines GPS-Empfängers durchfahren und die geographische Position und die Zeit zu bestimmten Zeitpunkten aufgezeichnet. Bei der mobilen Station handelt es sich um ein übliches Empfangsgerät, beispielsweise Handy, das aus den bekannten funktionalen Gruppen Mobil-Terminal, Terminal-Adapter und Terminal-Equipment besteht. Zusätzlich weist dieses Gerät eine Empfangseinrichtung auf, die in der Lage ist, die über Satelliten abgestrahlte geographische Position sowie örtliche Zeit aufgrund des sogenannten Globalen Positionierungs Systems (GPS) zu empfangen. Diese mobile Station kann sich beispielsweise in dem Kofferraum eines Fahrzeugs, auch Taxi oder Bus, befinden und zeichnet in vorgegebenen Zeitabständen die GPS-Zeit und die geographische Position auf, die das Fahrzeug gerade hat. Zusätzlich werden in bestimmten Zeitabständen Rufaufbausignale von irgend einem Endgerät über eine Basisübertragungsstation (BTS) zu der mobilen Station (MS) oder umgekehrt gesandt und die GPS-Position zu jedem Rufaufbausignal in der mobilen Station gespeichert. Bei der Basisübertragungsstation handelt es sich um die zu der zu untersuchenden Zelle zugehörigen Basisübertragungsstation. Nach der Herstellung der Verbindung wird diese nach einer vorgegebenen Zeit automatisch unterbrochen und erneut hergestellt, um Synchronisationsfehler zu minimieren. Gleichzeitig erfolgt ein Aufzeichnen der Signale, die über die BTS zu der betreffenden MS in bestimmten Zeitabständen gesandt wurden, wobei gleichzeitig der Zeitstempel der dazu verwendeten Mobilfunk-Analyseeinrichtung aufgezeichnet wird. Die somit erhaltenen Daten werden sortiert nach den Zeitstempeln zusammengemischt und im Anschluß daran die Meßergebnisse in Abhängigkeit von der geographischen Position und der Zeit ausgegeben. Damit kann auf Grund des Vorliegens der genauen geographischen Position eine Analyse des Netzes mittels der Mobilfunk-Analyseeinrichtung hinsichtlich der für die qualitative Beurteilung üblichen Parameter durchgeführt werden.

Die Sortierung der aufgezeichneten Daten nach Zeitstempel erfolgt in der Art, daß jedem von dem Mobilfunk-Analyseeinrichtung aufgezeichneten Signal die geographische Position zugeordnet wird, die durch Vergleich der Zeitstempel der mobilen Station und der Mobilfunk-Analyseeinrichtung der Position des gesamten Signals am nächsten kommt.

Auf Grund der möglicherweise unterschiedlichen Taktzeiten in der mobilen Station und der Mobilfunk-Analyseeinrichtung wird gemäß einer bevorzugten Ausführungsform unter Berücksichtigung der GPS-Taktzeit als Master-Zeit die interne Taktzeit der Mobilstation und der Mobilfunk-Analyseeinrichtung synchronisiert. Die Taktzeiten der Mobilfunk-Analyseeinrichtung werden durch die PCM-Taktzeiten der Meßschnittstelle (Abis-Interface) bestimmt. Die Korrektur der Zeitstempel der mobilen Station als auch der Mobilfunk-Analyseeinrichtung erfolgt gemäß der Bedingung $tx_{corr} = tx + (t_{GPS} - t_q)/n \times x$. $t_{GPS}$ ist dabei die Zeit innerhalb einer GPS-Periode, die beispielsweise als eine Sekunde angenommen werden kann, da das GPS jede Sekunde ein Signal sendet. $t_q$ ist der Zeitraum den die jeweilige Meßeinheit, deren Zeitstempel korrigiert werden soll, mißt, während das GPS genau diese eine Sekunde durchläuft. $tx$ ist der zu korrigierende Zeitstempel, d. h. die asynchrone Nachricht, die nicht in dem Ein-Sekunden-Raster des GPS empfangen wird. Diese wird korrigiert, indem Zeitintervalle innerhalb einer GPS-Periode gesetzt werden, wobei die Zeitintervalle x so gewählt werden, daß sie dem gemessenen Zeitstempel ziemlich nahe kommen. x gibt die Nummer des Intervalls an, in dem der Zeitstempel sitzt, der in Bezug auf das Intervall korrigiert werden soll. Die Korrektur erfolgt gemäß der Formel mit der Gesamtzahl n aller Intervalle, wobei die Intervall-Länge, wie bereits vorstehend erwähnt, je nach Bedarf bestimmt werden muß (Unterteilung der GPS-Periode von einer Sekunde in beispielsweise 1.000, 100 oder nur 10 Intervalle).

Um außerdem noch Zeitverzögerungen auszugleichen, die auf Grund der Übertragung der Daten von der BTS zu der MS hinsichtlich der Zeitstempel auftreten können, wird gemäß einer weiteren bevorzugten Ausführungsform vor der Sortierung der aufgezeichneten Daten und nach der Synchronisation auf die GPS-Taktzeit die Zeitstempel eines gleichen Signals der MS und der Mobilfunk-Analyseeinrichtung verglichen und bei einer Differenz die Differenz als Übertragungsverzögerung den Zeitstempeln der MS hinzugefügt.

Für die Auswertung können die aufgezeichneten Daten der mobilen Station über das globale System für Mobilkommunikation zu der Mobilfunk-Analyseeinrichtung übertragen werden. Dies erspart gegenüber einer Aufzeichnung auf einer Diskette von Einspeisung in die Mobilfunk-Analyseeinrichtung Zeit und Aufwand.

Die Anordnung umfaßt mindestens eine mobile Station, die einen GPS-Empfänger zur Erkennung der geographischen Position der mobilen Station und der GPS-Zeit und eine Aufzeichungseinheit zum Speichern der geographischen Position und der dazugehörigen Zeit in bestimmten Abständen sowie der Zeit beim Empfang eines Rufaufbausignals aufweist. Die Anordnung umfaßt außerdem eine Mobilfunk-Analyseeinrichtung, die mittels einer Schnittstelle (Abis-Interface) zwischen einer oder mehreren Basisübertragungsstationen (BTS) und den zugehörigen Basisstationensteuerungen (BSC) schaltbar ist. Die Mobilfunk-Analyseeinrichtung (MA) weist außerdem einen GPS-Empfänger zur Erkennung der graphischen Position und der Zeit auf, um insbesondere die GPS-Zeit als Master-Zeit zur Synchronisation der internen MA-Zeit, die auf der Abis-Zeit basiert, zu synchronisieren. Außerdem weist die MA ein Datenaufzeichnungseinheit zum Aufzeichnen und Speichern der übertragenen Daten und Zeitstempel zwischen mindestens einer der Basisübertragungsstationen und einer der mobilen Stationen, eine Datenauswerteeinheit zum Zusammenmischen der aufgezeichneten Daten der mobilen Station mit den aufgezeichneten übertragenen Daten, und eine Dateneinheit zum Ausgeben der übertragenen Daten in Abhängigkeit von der geographischen Position in der mobilen Station und in der Zeit auf.

Aufgrund des erfindungsgemäßen Verfahrens und der Anordnung können somit alle Meßwerte für beide Richtungen (Up-Link, Down-Link) sowie bessere Informationen über die Versorgung der Zelle erhalten werden. Außerdem kann leicht die geographische Position eines Problems ermittelt bzw. es können positionsabhängige Statistiken unter Verwendung der bekannten über die Mobilfunk-Analyseeinrichtung ausergebbaren Informationen erstellt werden. Der Einsatz von hochqualifizierten Mitarbeitern in einer mobilen Teststation ist nicht mehr erforderlich.

Nachfolgend wird die Erfindung in Verbindung mit den begleitenden Zeichnungen anhand eines Ausführungsbeispiels mehr erläutert. Es stellen dar:

Figur 1     Die Anordnung mit nur einer mobilen Station und die Anlenkung der Mobilfunk-Analyseeinrichtung an das Mobilfunk-Netz in schematischer Blockbilddarstellung und

Figur 2    ein Blockschaltbild, das den funktionellen Zusammenhang der einzelnen in der Mobilfunk-Analyseeinrichtung und in der mobilen Station angeordneten Einrichtungen veranschaulicht.

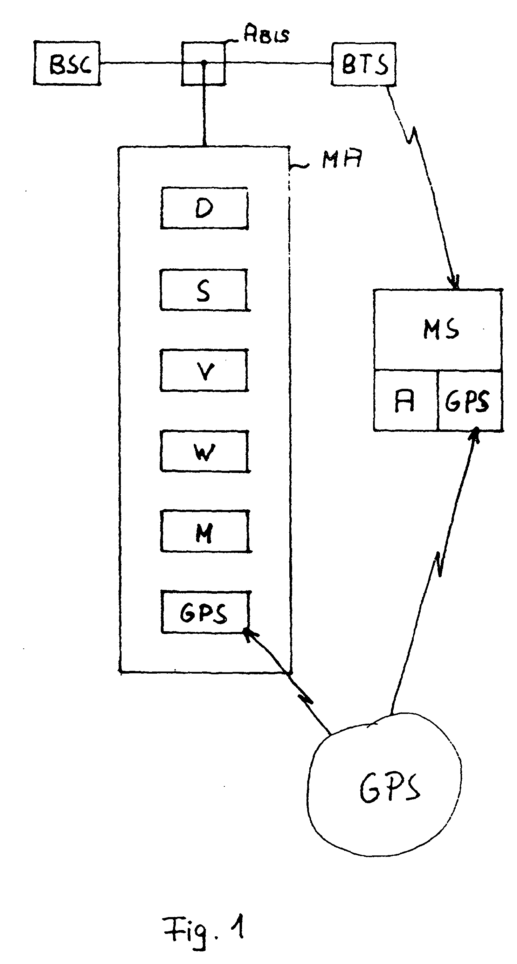

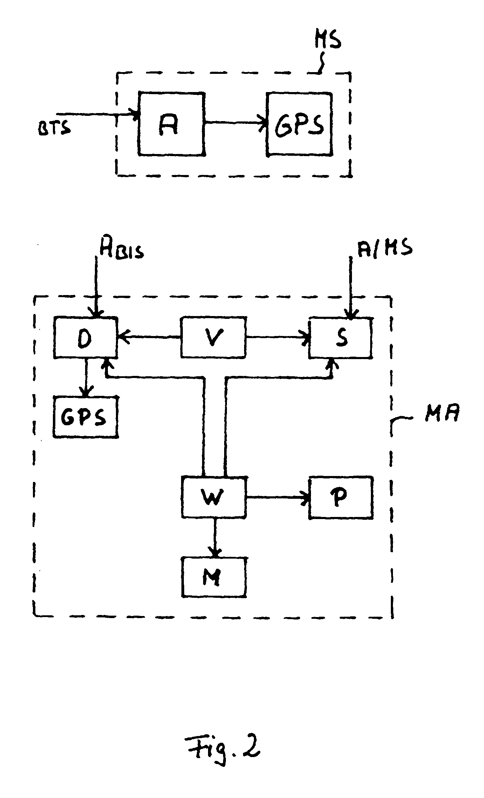

In den Figuren 1 und 2 sind die einzelnen Zuordnungen und Wirkungsweisen der einzelnen Einheiten schematisch dargestellt und werden nachfolgend gemeinsam unter Bezugnahme auf die Figuren erläutert.

Zur Durchführung der Messung innerhalb einer Zelle wird ein Fahrzeug benötigt, in dem sich eine mobile Station, beispielsweise Handy, befindet. Die mobile Station benötigt außer den üblichen bei diesen Geräten vorhandenen Einrichtungen einen GPS-Empfänger, der in der Lage ist, die über Satelliten abgestrahlten Informationen hinsichtlich der geographischen Position und der Zeit auf Grund des GPS-Systems zu empfangen. Das mobile System kann entweder in Test-Fahrzeugen oder auch durch Omnibusse oder Taxis transportiert werden. In dem mobilen System wird mittels einer Aufzeichnungseinheit A die GPS-Zeit und die geographische Position gespeichert. Diese kann beispielsweise auf einer Diskette oder in einem Speicher erfolgen, der über das Mobilfunknetz wieder abgerufen werden kann. Die mobile Station hat die Fähigkeit, selbständig Rufe abzusenden, oder sie wird mittels eines Automats über das Mobilfunknetz mit der entsprechenden Nummer angerufen. Nach erfolgtem Rufaufbau wird in vorgegebener Zeit die Verbindung beendet. Mit jedem Rufaufbausignal und mit jedem von dem GPS-System erzeugtem Meßbericht wird die GPS-Position gespeichert.

Bei der Erzeugung eines Meßberichts, beispielsweise alle 480 ms, hängt die Auflösung von der Geschwindigkeit des Fahrzeugs ab, in dem die mobile Station sich befindet. Die Genauigkeit hängt von dem GPS-Empfänger ab, die in diesem Ausführungsbeispiel mit 5 m angenommen wird. Damit ergibt sich die nachfolgende Auflösung :

| Geschwindigkeit in km | 0 | 20 | 50 | 100 | 200 |
|---|---|---|---|---|---|
| Auflösung in m | 0 | 2,7 | 6,7 | 13,4 | 26,7 |

Die zugehörige Mobilfunk-Analyseeinrichtung MA besteht aus einer bekannten Mobilfunk-Analyseeinrichtung MA10 des Anmelders mit einem zusätzlichen GPS-Empfänger der die absolute Zeit steuert. Die absolute Zeit ist der Zeitstempel, mit dem die Aufzeichnung gestartet wird. Während der Aufzeichnung werden alle Nachrichten mit einem Zeitstempel versehen, der sich auf die PCM-Verbindung (Puls Code Modulation) bezieht. Alle Nachrichten werden in der Datenaufzeichnungseinheit D erfaßt und gespeichert. Nach der Aufzeichnung werden die übertragenen Daten mit den Daten der mobilen Station nach Zeitstempel sortiert kombiniert. Hierzu werden die Daten aus der mobilen Station entweder über das Netz übertragen oder per Diskette eingelesen und in der Speichereinheit S abgelegt.

In der Mobilfunk-Analyseeinrichtung MA wird eine Rufaufzeichnung durchgeführt in dem alle Signaldaten einschließlich einer definierten Telefonnummer oder eines Satzes von Telefonnummern erfaßt werden.

Für die Zeitsynchronisation auf Grund der Unterschiede zwischen der GPS-Zeit und der internen Zeit der mobilen Station sowie der Abis-Schnittstelle greift sowohl in der mobilen Station MS als auch in der Mobilfunk-Analyseeinrichtung MA die Aufzeichnungseinheit A bzw. die Datenaufzeichnungseinheit D auf den jeweiligen GPS-Empfänger zu und ermittelt eine korrigierte GPS-Zeit gemäß der Formel $tx_{corr} = tx + (t_{GPS} - t_q)/ n \times x$.

Nachdem die von der mobilen Station gelieferten Daten in der Mobilfunk-Analyseeinrichtung gespeichert sind, kann die Vergleicheeinrichtung V die Zeitstempel eines gleichen Signals der mobilen Station und der Mobilfunk-Analyseeinrichtung vergleichen und bei einer Differenz die Differenz als Übertragungsverzögerung dem Zeitstempel der mobilen Station hinzuaddieren.

Unter der Annahme, daß eine derartige letztere Korrektur nicht erforderlich ist, könnten seitens der mobilen Station und der Mobilfunk-Analyseeinrichtung folgende Datentabellen erstellt werden:

Mobile Station

| Ereignis | Zeitstempel | Pos. x | Pos. y |
|---|---|---|---|
| GPS | 12:05:49.367 | 48.49.12 | 9.00.34 |
| GPS | 12:05:59.367 | 48.49.23 | 9.00.25 |
| RUFAUFBAU | 12:06:02.317 | 48.49.23 | 9.00.25 |
| GPS | 12:06:09.367 | 48.49.56 | 9.00.38 |
| : | : | : | : |
| GPS | 12:31:39.367 | 49:00:63 | 9.00.41 |

Mobilfunk-Analysestation

| Ereignis | Zeitstempel |
|----------|-------------|
| MSG1 | 12:01:41.951 |
| MSG2 | 12:05:29.443 |
| RUFAUFBAU | 12:06:02.317 |
| MSG3 | 12:06:03.725 |
| : | : |
| MSGn | 12:15:58.888 |

Eine Standard-GPS-Einheit erzeugt jede Sekunde einen neuen Satz von Daten. Die Tabelle für das mobile System besteht aus Reihen, in denen die Daten direkt von dem GPS-System übernommen werden (gekennzeichnet mit dem Ereignis GPS). Die anderen Reihen enthalten Übertragungsereignisse die asynchron zu den GPS-Ereignissen sind. Für die Übertragungsereignisse werden die entsprechenden Zeitstempel von der internen Zeit der mobilen Station übernommen und anschließend, wie vorstehend erwähnt, durch das GPS-System synchronisiert. Die entsprechende geographische Position für das entsprechende Übertragungsereignis wird von dem letzten GPS-Ereignis genommen. Das Rufaufbausignal, das neben einem SETUP-Signal einige andere Parameter und auch die Rufnummer enthält, wird für die jeweilige mobile Station zu Vermeidung von Fehlverbindungen für den Eintrag in die obige Tabelle gewählt.

Die Tabelle der Mobilfunk-Analysestation enthält Übertragungsinformationen, die im Vergleich zu den regulären GPS-Takten irregulär und nicht vorhersagbar sind. Der Zeitstempel wird, wie vorstehend erwähnt, durch das GPS-System resynchronisiert.

In der Auswerteeinrichtung W werden die Enddaten nunmehr entsprechend der nachfolgenden Tabelle miteinander vermischt:

| Ereignis | Zeitstempel | Pos. x | Pos. y |
|----------|-------------|--------|--------|
| MSG1 | 12:01:41.951 | 48.48.51 | 9.00.52 |
| MSG2 | 12:05:29.443 | 48.49.12 | 9.00.34 |
| RUFAUFBAU | 12:06:02.317 | 48.49.23 | 9.00.25 |
| MSG3 | 12:06:03.725 | 48.49.56 | 9.00.38 |
| : | : | : | : |
| MSGn | 12:15:58.888 | 49:00:63 | 9.00.41 |

Die Positionen x und y werden in der Tabelle der Mobilfunk-Analyseeinrichtung zugefügt, indem die Zeitstempel der beiden Tabellen verglichen und der Reihe nach aufgelistet werden. Die Nachrichten MSG erhalten die Position, in der die Zeitstempel der beiden Tabellen am besten korrelieren.

Im Anschluß daran kann mit einer entsprechenden Ausgabeeinrichtung M beispielsweise Bildschirm oder Drucker die vorstehende Tabelle ausgegeben werden.

Aufgrund dieser ermittelten Werten können weitere Anwendungen erschlossen werden, die über die Mobilfunk-Analyseeinrichtung MA zur Verfügung gestellt werden. Diese erzeugt beispielsweise verschiedene Statistiken betreffend die Zellen und/oder die Rufe von der Position der Abis-Schnittstelle.

Zusammen mit der geographischen Position können wesentlich komplexere Ergebnisse erzeugt werden. Diese können beispielsweise in ASCII-Tabellen für weitere Verarbeitung oder in x/y-Grafen dargestellt werden. Die gemessen Punkte markieren eine geographische Position in der ein zuvor spezifiziertes Ereignis auftrat. So kann beispielsweise die Qualität der Übertragung getrennt nach Uplink/Downlink-Ergebnissen dargestellt werden. Weitere Möglichkeiten der bekannten Auswertungen unter Berücksichtigung der geographischen Position sind :

- Ruf-Versuche/Ruf-Erfolge pro Örtlichkeit
- mißlungene Übergabe-Versuche/-Rufe pro Örtlichkeit
- abnormale Ruf-Beendigungen/Rufübergabe-Beendingungen pro Örtlichkeit
- Rufübergabe-Fälle pro Örtlichkeit
- Interferenz-Analyse

- Insel-Analyse
- Kombination der Abis-Schnittstelle Rufaufzeichnung mit der geographischen Position
- Korrelation der Rufaufzeichnung zwischen der Abis-Schnittstelle und der mobilen Station.

**Patentansprüche**

1. Verfahren zur Messung der Übertragungsqualität in Zellen von Mobilfunknetzen, mit den folgenden Schritten:

   a) Durchfahren der zu messenden Zelle unter Verwendung einer mobilen Station (MS) und eines GPS-Empfängers und Aufzeichnen der geographischen Position (GPS-Position) und der Zeit zu bestimmten Zeitpunkten;
   b) Senden eines Rufaufbausignals über eine Basisübertragungsstation (BTS) zu der mobilen Station (MS) oder umgekehrt in bestimmten Zeitabständen und Speichern der GPS-Position mit jedem Rufaufbausignal
   c) Aufzeichnen von zwischen der Basisübertragungsstation (BTS) und der betreffenden mobilen Station (MS) in bestimmten Zeitabständen gesandten Signale mit Zeitstempel mittels einer Mobilfunk-Analyseeinrichtung (MA); die mittels einer Schnittstelle (Abis) zwischen einer oder mehreren Basisstationen (BCS) und den zugehörigen Basisstationsteuerungen (BSC) schaltbar ist
   d) Zusammenführen der aufgezeichneten Daten der mobilen Station (MS) mit den aufgezeichneten Daten der Mobilfunk-Analyseeinrichtung (MA) sortiert nach Zeitstempel;
   e) Ausgabe der Meßergebnisse in Abhängigkeit von der geographischen Position und der Zeit,
   f) Sortieren der aufgezeichneten Daten nach Zeitstempel, wobei jedem von der Mobilfunk-Analyseeinrichtung (MA) aufgezeichneten Signal die geographische Position zugeordnet wird, die durch Vergleich der Zeitstempel der mobilen Station (MS) und der Mobilfunk-Analyseeinrichtung (MA) der Position des gesandten Signals am nächsten kommt, und jedes Rufaufbausignal mit der tatsächlichen gespeicherten Position angegeben wird.

2. Verfahren nach Anspruch 1, **dadurch gekennzeichnet, daß** vor dem Zusammenfassen der aufgezeichneten Daten die Taktzeiten der mobilen Station (MS) und der Mobiffunk-Analyseeinrichtung (MA) unter Berücksichtigung der GPS-Taktzeit, der internen Taktzeit der mobilen Station (MS) und der PCM-Taktzeit der Meßschnittstelle (Abis-Interface) synchronisiert werden.

3. Verfahren nach Anspruch 2, **dadurch gekennzeichnet, daß** jeder Zeitstempel der mobilen Station (MS) und der Mobilfunk-Analyseeinrichtung (MA) gemäß der Bedingung

$$tx_{corr} = tx + (t_{GPS} - t_q)/\, n \, \cdot \, x$$

mit

   $t_{GPS}$ = Zeit innerhalb einer GPS-Periode;
   $t_q$ = gemessene Zeit während einer GPS-Periode;
   $n$ = Anzahl der Intervalle innerhalb einer GPS-Periode;
   $tx$ = ein zu korrigierender Zeitstempel;
   $tX_{corr}$ = korrigierter Zeitstempel tx;
   $x$ = Nummer des Intervalls innerhalb 1... bis n

korrigiert wird.

4. Verfahren nach Anspruch 3, **dadurch gekennzeichnet, daß** nach der Synchronisation der mobilen Station (MS) und der Mobilfunk-Analyseeinrichtung (MA) die Zeitstempel eines gleichen Signals der mobilen Station (MS) und der Mobilfunk-Analyseeinrichtung (MA) verglichen werden und bei einer Differenz die Differenz als Übertragungsverzögerung den Zeitstempeln der mobilen Station (MS) vor dem Zusammenfügen hinzuaddiert werden.

5. Verfahren nach einem der vorangegangenen Ansprüche, **dadurch gekennzeichnet, daß** die aufgezeichneten Daten der mobilen Station (MS) über das globale System für Mobilkommunikation (GSM) zu der Mobilfunk-Analyseeinrichtung (MA) übertragen werden.

6. Anordnung zum Messen der Übertragungsqualität in Zellen von Mobilfunknetzen, umfassend

mindestens eine mobile Station (MS), die

- einen GPS-Empfänger zur Erkennung der geographischen Position der mobilen Station und der GPS-Zeit und
- eine Aufzeichnungseinheit (A) zum Speichern der geographischen Position und der zugehörigen Zeit in bestimmten Abständen sowie der Zeit beim Empfang eines Rufaufbausignals aufweist, wobei die Aufzeichnungseinheit (A) der mobilen Station (MS) derart ausgebildet ist, dass sie in bestimmten Zeitabständen die GPS-Zeit mit geographischer Position sowie die Zeit in der mobilen Station (MS-Zeit) mit einem Rufaufbausignal mit der letzten geographischen Position aufzeichnet und speichert, und

eine Mobilfunk-Analyseeinrichtung (MA), die mittels einer Schnittstelle (Abis) zwischen einer oder mehreren Basisstationen (BCS) und den zugehörigen Basisstationsteuerungen (BSC) schaltbar ist und die

- einen GPS-Empfänger zur Erkennung der geographischen Position und der Zeit,
- eine Datenaufzeichnungseinheit (D) zum Aufzeichnen und Speichern der übertragenen Daten mit Zeitstempel zwischen mindestens einer der Basisübertragungsstationen (BTS) und mindestens einer der mobilen Stationen (MS), wobei die Datenaufzeichnungseinheit (D) der Mobilfunk-Analyseeinrichtung (MA) derart ausgebildet ist, dass sie den Zeitstempel der von mindestens einer Basisübertragungsstation (BTS) übertragenen Daten sowie den Zeitstempeln des Rufaufbausignals zu den betreffenden mobilen Stationen (MS) mit der Zeit der Mobilfunk-Analyseeinrichtung (MA) aufzeichnet und speichert
- einer Datenauswerteeinheit (W) zum Zusammenmischen der aufgezeichneten Daten der mobilen Station mit den aufgezeichneten übertragenen Daten, und
- eine Datenausgabeinheit (M) zum Ausgeben der übertragenen Daten in Abhängigkeit von der geographischen Position der mobilen Station und der Zeit aufweist.

7. Anordnung nach Anspruch 6, **dadurch gekennzeichnet, daß** die Aufzeichnungseinheit (A) der mobilen Station (MS) und/oder die Datenaufzeichnungseinheit (D) der Mobilfunk-Analyseeinrichtung (MA) auf den jeweiligen GPS-Empfänger zugreift und die jeweils individuelle Zeit der mobilen Station (MS) bzw. der Mobilfunk-Analyseeinrichtung (MA) auf die GPS-Zeit synchronisiert.

8. Anordnung nach Anspruch 6, **dadurch gekennzeichnet, daß** die Mobilfunk-Analyseeinrichtung eine Speichereinrichtung (S) zum Speichern in der von der mobilen Station (MS) gespeicherten Daten aufweist.

9. Anordnung nach Anspruch 7 oder 8, **dadurch gekennzeichnet, daß** die Mobilfunk-Analyseeinrichtung (MA) eine Vergleicheeinrichtung (V) aufweist, die die Zeitstempel des gleichen Signals der mobilen Station (MS) mit der Mobilfunk-Analyseeinrichtung (MA) vergleicht, und bei einer Differenz die Differenz als Übertragungsverzögerung den Zeitstempeln der mobilen Station (MS) hinzuaddiert.

10. Anordnung nach Anspruch 9, **dadurch gekennzeichnet, daß** die Datenauswerteeinheit (W) auf die Speichereinrichtung (S) mit den Daten der mobilen Station und auf die Datenaufzeichnungseinheit (D) zugreift und die Daten nach Zeitstempel sortiert, wobei sie jedem von der Mobilfunk-Analyseeinrichung (MA) aufgezeichnetem Signal die geographische Position zuordnet, die durch Vergleich der Zeitstempel der mobilen Station und der Mobilfunk-Analyseeinrichung der geographische Position des gesamten Signals am nächsten kommt, und jedes Rufaufbausignal mit der tatsächlich gespeicherten Position angibt.

## Revendications

1. Procédé pour mesurer la qualité de transmission dans des cellules de réseaux de téléphonie mobile, présentant les étapes suivantes :

a) traversée de la cellule à mesurer en utilisant une station mobile (MS) et un récepteur GPS et en enregistrant la position géographique (position GPS) et l'heure à des instants définis ;
b) envoi d'un signal d'établissement d'appel par une station de transmission de base (BTS) à la station mobile (MS) ou inversement à des intervalles de temps définis et mémorisation de la position GPS à chaque signal d'établissement d'appel ;
c) enregistrement des signaux envoyés à intervalles de temps définis entre la station de transmission de base (BTS) et la station mobile (MS) concernée avec estampille horaire au moyen d'un dispositif d'analyse de téléphonie mobile (MA) qui est commutable au moyen d'une interface (Abis) entre une ou plusieurs stations de base (BTS) et les commandes de station de base (BSC) associées ;
d) regroupement des données enregistrées de la station mobile (MS) avec les données enregistrées du dispositif d'analyse de téléphonie mobile (MA) triées par estampille horaire ;

e) sortie des résultats de mesure en fonction de la position géographique et de l'heure ;

f) tri des données enregistrées par estampille horaire ou chronotimbre, la position géographique qui, par comparaison des estampilles horaires de la station mobile (MS) et du dispositif d'analyse de téléphonie mobile (MA), se rapproche le plus de la position du signal envoyé, étant associée à chaque signal enregistré par le dispositif d'analyse de téléphonie mobile (MA) et chaque signal d'établissement d'appel étant indiqué avec la position effectivement enregistrée.

2.  Procédé selon la revendication 1, **caractérisé par le fait qu'**avant le regroupement des données enregistrées les temps de cycle de la station mobile (MS) et du dispositif d'analyse de téléphonie mobile (MA) sont synchronisés en tenant compte du temps de cycle GPS, du temps de cycle interne de la station mobile (MS) et du temps de cycle PCM de l'interface de mesure (interface Abis).

3.  Procédé selon la revendication 2, **caractérisé par le fait que** chaque estampille horaire de la station mobile (MS) et du dispositif d'analyse de téléphonie mobile (MA) est corrigée selon la condition

$$tx_{corr} = tx + (t_{GPS} - t_q)/n * X$$

avec

$t_{GPS}$ = temps à l'intérieur d'une période GPS ;
$t_q$ = temps mesuré pendant une période GPS ;
n = nombre d'intervalles à l'intérieur d'une période GPS ;
tx = une estampille horaire à corriger ;
$tx_{corr}$ = estampille horaire tx corrigée ;
x = numéro de l'intervalle de 1 à n

4.  Procédé selon la revendication 3, **caractérisé par le fait qu'**après la synchronisation de la station mobile (MS) et du dispositif d'analyse de téléphonie mobile (MA), les estampilles horaires d'un même signal de la station mobile (MS) et du dispositif d'analyse de téléphonie mobile (MA) sont comparées et, en cas de différence, la différence est additionnée en tant que retard de transmission aux estampilles horaires de la station mobile (MS) avant la réunion.

5.  Procédé selon l'une des revendications précédentes, **caractérisé par le fait que** les données enregistrées de la station mobile (MS) sont transmises par le système global de communication mobile (GSM) au dispositif d'analyse de téléphonie mobile (MA).

6.  Dispositif pour mesurer la qualité de transmission dans des cellules de réseaux de téléphonie mobile, comprenant :

au moins une station mobile (MS) qui présente

- un récepteur GPS pour déterminer la position géographique de la station mobile et l'heure GPS et
- une unité d'enregistrement (A) pour mémoriser la position géographique et l'heure associée à des intervalles définis ainsi que l'heure de réception d'un signal d'établissement d'appel, l'unité d'enregistrement (A) étant conçue pour enregistrer et mémoriser à des intervalles de temps définis l'heure GPS avec la position géographique ainsi que l'heure dans la station mobile (heure MS) d'un signal d'établissement d'appel avec la dernière position géographique, et

un dispositif d'analyse de téléphonie mobile (MA) qui est commutable au moyen d'une interface (Abis) entre une ou plusieurs stations de base (BTS) et les commandes de station de base (BSC) associées et qui présente

- un récepteur GPS pour déterminer la position géographique et l'heure,
- une unité d'enregistrement de données (D) pour enregistrer et mémoriser les données transmises avec une estampille horaire ou chronotimbre entre au moins une des stations de transmission de base (BTS) et au moins une des stations mobiles (MS), l'unité d'enregistrement de données (D) du dispositif d'analyse de téléphonie mobile (MA) étant conçue de manière à enregistrer et mémoriser l'estampille horaire des données transmises par au moins une station de transmission de base (BTS) ainsi que les estampilles horaires du signal d'établissement d'appel vers les stations mobiles (MS) concernées avec l'heure du dispositif d'analyse de téléphonie mobile (MA),

- une unité d'évaluation de données (W) pour mélanger les données enregistrées de la station mobile avec les données transmises enregistrées, et

- une unité de sortie de données (M) pour la sortie des données transmises en fonction de la position géographique de la station mobile et de l'heure.

**7.** Dispositif selon la revendication 6, **caractérisé par le fait que** l'unité d'enregistrement (A) de la station mobile (MS) et/ou l'unité d'enregistrement de données (D) du dispositif d'analyse de téléphonie mobile (MA) accède au récepteur GPS respectif et synchronise le temps individuel de la station mobile (MS) et du dispositif d'analyse de téléphonie mobile (MA) sur le temps GPS.

**8.** Dispositif selon la revendication 6, **caractérisé par le fait que** le dispositif d'analyse de téléphonie mobile (MA) présente un dispositif de mémorisation (S) pour mémoriser les données mémorisées par la station mobile (MS).

**9.** Dispositif selon la revendication 7 ou 8, **caractérisé par le fait que** le dispositif d'analyse de téléphonie mobile (MA) présente un dispositif de comparaison (V) qui compare les estampilles horaires du même signal de la station mobile (MS) et du dispositif d'analyse de téléphonie mobile (MA) et, en cas de différence, additionne la différence en tant que retard de transmission aux estampilles horaires de la station mobile (MS).

**10.** Dispositif selon la revendication 9, **caractérisé par le fait que** l'unité d'évaluation de données (W) accède au dispositif de mémorisation (S) contenant les données de la station mobile et à l'unité d'enregistrement de données (D) et trie les données par estampille horaire, en associant à chaque signal enregistré par le dispositif d'analyse de téléphonie mobile (MA) la position géographique qui, par comparaison des estampilles horaires de la station mobile et du dispositif d'analyse de téléphonie mobile, se rapproche le plus de la position géographique du signal total, et en indiquant chaque signal d'établissement d'appel avec la position effectivement mémorisée.

**Claims**

**1.** A method for measuring the transmission quality in cells of mobile radio networks, comprising the following steps:

a) Travelling through the cell to be measured, using a mobile station (MS) and a GPS receiver, and recording the geographic position (GPS position) and the time at specified intervals;

b) Sending a call build-up signal via a base transmission station (BTS) to the mobile station (MS) or vice-versa at specified intervals and storing the GPS position with each call build-up signal;

c) Recording of signals sent at specified time intervals with time stamp between the base transmission station (BTS) and the respective mobile station (MS), by means of a mobile radio analysis device (MA), which by means of an interface (Abis) is switchable between one or several base transmission stations (BTS)and the respective base station controls (BSC);

d) Mixing together the recorded data of the mobile station (MS) with the recorded data of the mobile radio analysis device (MA) sorted according to time stamp;

e) Issuing the measured results by geographic position and time;

f) Sorting the recorded data according to time stamp, with each of the signals recorded by the mobile radio analysis device (MA) being allocated that position which, by comparing the time stamps of the mobile station (MS) and of the mobile radio analysis device (MA), is nearest to the position of the transmitted signal, and with each call build-up signal being indicated with the actual stored position.

**2.** A method according to claim 1, **characterised in that** prior to combining the recorded data, the clock pulses of the mobile station (MS) and the mobile radio analysis device (MA) are synchronised, taking into account the GPS clock pulse, the internal clock pulse of the mobile station (MS) and the PCM clock pulse of the measuring interface (Abis interface).

**3.** A method according to claim 2, **characterised in that** each time stamp of the mobile station and the mobile radio analysis device according to the condition

$$tx_{corr} = tx + t_{GPS} - t_q) / n \cdot x$$

is corrected with

$t_{GPS}$ = time within a GPS period;
$t_q$ = measured time during a GPS period;
n = number of intervals within a GPS period;
tx = a time stamp to be corrected;
$tx_{corr}$ = corrected time stamp tx;
x = number of the interval within 1... to n.

4. A method according to claim 3, **characterised in that** after synchronising the mobile station (MS) and the mobile radio analysis device (MA), the time stamps of an identical signal of the mobile station (MS) and the mobile radio analysis device (MA) are compared, and if there is a difference, the difference is added as a transmission delay to the time stamps of the mobile station (MS), prior to combination.

5. A method according to one of the preceding claims, **characterised in that** the recorded data of the mobile station (MS) is transmitted to the mobile radio analysis device (MA) via the global system for mobile communication (GSM).

6. A device for measuring the transmission quality in cells of mobile radio networks, comprising
   at least one mobile station (MS) comprising

   - one GPS receiver for determining the geographic position of the mobile station, and the GPS time; and
   - a recording unit (A) for storing the geographic position and the respective time in specified intervals, as well as the time of receiving a call build-up signal, wherein the recording unit (A) of the mobile station (MS) at certain time intervals records and stores the GPS time with geographic position as well as the time in the mobile station (MS time) with a call build-up signal with the last geographic position; and
   a mobile radio analysis device (MA) which by means of an interface (Abis) is switchable between one or several base stations (BTS) and the respective base station controls (BSC), comprising
   - a GPS receiver for determining the geographic position and the time;
   - a data recording unit (D) for recording and storing the transmitted data with time stamp between at least one of the base transmission stations (BTS) and at least one of the mobile stations (MS), wherein the data recording device (D) of the mobile radio analysis device (MA) records and stores the time stamp of the data transmitted by at least one base supply station (BTS) as well as the time stamps of the call build-up signal to the respective mobile stations, with the time of the mobile radio analysis device;
   - a data evaluation unit (W) for mixing together the recorded data of the mobile station with the recorded transmitted data; and
   - a data output unit (M) for issuing the transmitted data by geographic position of the mobile station and by time.

7. A device according to claim 6, **characterised in that** the recording unit (A) of the mobile station (MS) and/or the data recording unit (D) of the mobile radio analysis device (MA) accesses the respective GPS receiver and synchronises the respective individual time of the mobile station or of the mobile radio analysis device to the GPS time.

8. A device according to claim 6, **characterised in that** the mobile radio analysis device comprises a storage device (S) for storing the data stored by the mobile station (MS).

9. A device according to claims 7 or 8, **characterised in that** the mobile radio analysis device (MA)comprises a comparison device (V) which compares the time stamps of the same signal of the mobile station (MS) with the mobile radio analysis device (MA), and if there is a difference, adds the difference as a transmission delay to the time stamps of the mobile station (MS).

10. A device according to claim 9, **characterised in that** the data evaluation unit (W) accesses the storage device (S) with the data of the mobile station, and accesses the data recording unit (D) and sorts the data according to time stamp; in so doing it allocates to each signal recorded by the mobile radio analysis device (MA) the geographic position which by comparing the time stamps of the mobile station with those of the mobile radio analysis device, is nearest to the geographic position of the entire signal, and it indicates each call build-up signal with the actually stored position.

Fig. 1

Fig. 2